(19) Europäisches Patentamt
European Patent Office
Office européen des brevets

(11) **EP 1 170 725 A2**

(12) **EUROPÄISCHE PATENTANMELDUNG**

(43) Veröffentlichungstag:
**09.01.2002 Patentblatt 2002/02**

(51) Int Cl.[7]: **G10L 15/18**, G10L 15/26

(21) Anmeldenummer: **01115126.3**

(22) Anmeldetag: **21.06.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **03.07.2000 DE 10032255**

(71) Anmelder: **SIEMENS AKTIENGESELLSCHAFT**
**80333 München (DE)**

(72) Erfinder: **Ruland, Tobias**
**81927 München (DE)**

(54) **Verfahren zur Sprachanalyse**

(57) Die Erfindung betrifft ein Verfahren zur rechnergestützten Sprachanalyse, bei dem einer sprachlichen Äußerung eine syntaktische Struktur zugeordnet wird. Dabei werden Zuordnungen mit Wahrscheinlichkeiten vorgenommen, die von einem erweiterten Kontext abhängen.

EP 1 170 725 A2

**Beschreibung**

Die Erfindung betrifft ein Verfahren, eine Anordnung und ein Programmprodukt zur Sprachanalyse.

Dabei dem einer sprachlichen Äußerung eine syntaktische Struktur zugeordnet wird. Dazu wird die Äußerung in Spracheinheiten unterteilt. In den häufigsten Fällen wird die Unterteilung so vorgenommen, dass ein Wort eine Spracheinheit bildet. Dann wird diesen Spracheinheiten jeweils eine Sprachkategorie zugeordnet. Die Sprachkategorien der Spracheinheiten in einer syntaktischen Struktur geben ihre grammatische Funktion wieder.

Die syntaktische Struktur einer sprachlichen Äußerung erhält man durch sukzessive Anwendung von Sprachstrukturregeln, die die Grammatik bilden. Die Anwendung einer Sprachstrukturregel wird als Aktion bezeichnet. Bei der Sprachanalyse wird ausgehend von einem Ausgangszustand die Sprachkategorie der ersten Spracheinheit herangezogen. Der Kombination aus Sprachkategorie und Spracheinheit wird bei einer deterministischen Sprache, etwa einer Computersprache, eine bestimmte Aktion zugeordnet. Diese Vorgehensweise ist zum Beispiel von Compilern bekannt, wobei in einem Parsingverfahren die Zuordnung über eine Parsingtabelle erfolgt.

Bei einer natürlichen Sprache, die Mehrdeutigkeiten aufweist, kann in vielen Fällen nicht mehr eine bestimmte Aktion zugeordnet werden, sondern es sind entsprechend der Mehrdeutigkeit der Sprache mehrere Aktionen zuordenbar. Für das Auffinden einer bevorzugten syntaktischen Struktur, wie es in der Sprachanalyse in der Regel gefordert wird, werden den Aktionen unterschiedliche Wahrscheinlichkeiten zugeordnet. Durch Ausführen der Aktionen werden ausgehend vom gegebenen Zustand eine Anzahl von Folgezuständen bestimmt. Bei alternativen Aktionen konkurrieren alle möglichen Folgezustände miteinander, was man dazu nutzen kann, diejenigen Folgezustände mit schlechteren probabilistischen Bewertungen von der weiteren Betrachtung auszuschließen. J. H. Wright und E. N. Wrigley "GLR-Parsing with Probability" in M. Tomita "Generalized LR-Parsing", Kluwer Academic Publishers, Boston, 1991, realisieren auf diese Art eine Form der Suche, bei der nur die besten konkurrierenden Folgen von Aktionen und Folgezuständen für die weitere Analyse verwendet werden.

Das Problem besteht nunmehr darin, die Wahrscheinlichkeiten für die unterschiedlichen Aktionen zu bestimmen. T. Briscoe und J. Carroll "Generalized Probabilistic LR-Parsing of Natural Language (Corpora) with Unification-Based Grammars" in "Computational Linguistics", Vol. 19, No. 1, 1993 ermitteln diese Wahrscheinlichkeiten kontextabhängig, indem sie sie von den Folgezuständen und den Sprachkategorien abhängig machen.

Davon ausgehend liegt der Erfindung die Aufgabe zugrunde, ein Verfahren, eine Anordnung und ein Computerprogrammprodukt zur rechnergestützten Sprachanalyse, insbesondere zum Parsing, zur Verfügung zu stellen, mit denen sich präzisere und aussagekräftigere Wahrscheinlichkeiten für die einzelnen Aktionen ermitteln lassen.

Diese Aufgabe wird durch ein Verfahren, eine Anordnung und ein Programmprodukt mit den Merkmalen der unabhängigen Patentansprüche gelöst.

In den Verfahren nach dem Stand der Technik werden die Wahrscheinlichkeiten für die Aktionen immer nur in Abhängigkeit von den in einem Parsingverfahren in der Parsingtabelle syntaktischen Größen ermittelt. Diese Größen werden als Kontext im engeren Sinne bezeichnet und sind Sprachkategorie, Zustände, einschließlich Folgezustände, und Aktionen. Das erfindungsgemäße Verfahren geht darüber hinaus, indem es auch syntaktische Größen für die Berechnung der Wahrscheinlichkeiten berücksichtigt, die bei den Verfahren nach dem Stand der Technik weder bei der Berechnung der Wahrscheinlichkeiten, noch sonst bei der Zuordnung einer Aktion zur Kombination von Zustand und Sprachkategorie Eingang finden. Diese syntaktischen Größen bilden den erweiterten Kontext.

Eine im erweiterten Kontext bevorzugte syntaktische Größe ist der Dialogakt der Äußerung. Wenn die Äußerung zum Beispiel den Dialogakt "Begrüßung" aufweist, es sich bei der Äußerung also um eine Begrüßungsformel handelt, ergeben sich für die Wahrscheinlichkeiten zu einer Kombination von Zustand und Sprachkategorie andere Werte, als sie sich für dieselbe Kombination von Zustand und Sprachkategorie bei einer Äußerung mit dem Dialogakt "Schilderung" ergeben.

Im Gegensatz zum Kontext im engeren Sinne, der nur die Sprachkategorie einer Spracheinheit enthält, kann der erweiterte Kontext auch die Spracheinheit selbst enthalten. Mit dieser Spracheinheit selbst können weitere Informationen verknüpft sein, die bei der Ermittlung der Wahrscheinlichkeiten und damit letztlich bei der Bewertung der Aktionen berücksichtigt werden. Darüber hinaus können die Wahrscheinlichkeiten noch von weiteren Spracheinheiten der Äußerung abhängen.

Eine weitere im erweiterten Kontext bevorzugte syntaktische Größe ist der Sprachstil, mit dem die Spracheinheit und/oder die Äußerung wiedergegeben wurde. Diese Größe tritt selbstverständlich nur auf, wenn die zu analysierende Äußerung tatsächlich gesprochene Sprache ist oder ihr anderweitig ein Sprachstil zugeordnet wird.

Für eine einfachere Analyse empfiehlt es sich, den Spracheinheiten eine Reihenfolge zuzuteilen und sie in dieser Reihenfolge abzuarbeiten. Die einfachste und in der Regel sinnvollste Reihenfolge ergibt sich dabei aus der Reihenfolge der Spracheinheiten in der Äußerung. Möglich ist aber zum Beispiel auch die umgekehrte Reihenfolge der Spracheinheiten in der Äußerung.

In der Regel wird das zur Verfügung stehende

Datenmaterial nicht ausreichen, um die Abhängigkeit der Wahrscheinlichkeiten von allen syntaktischen Größen im erweiterten Kontext zu bestimmen. Es ist deshalb vorteilhaft, mehrere syntaktische Größen des Kontextes zu einem Subkontext zusammenzufassen und die Wahrscheinlichkeit einer Aktion in einem Kontext durch eine Verrechnung der Wahrscheinlichkeiten der Aktion in den Subkontexten zu approximieren.

Es empfiehlt sich, für das Verfahren zur rechnergestützten Sprachanalyse auf ein stochastisches Parsing, insbesondere ein stochastisches LR-Parsing, zurückzugreifen, da diese Verfahren hinreichend bekannt und implementiert sind. Das stochastische LR-Parsing hat dabei noch den Vorteil einer sehr hohen Verarbeitungsgeschwindigkeit. Dies gilt insbesondere, wenn für das Zuordnen einer oder mehrere Aktionen zu einer Kombination von Zustand und Sprachkategorie eine Parsingtabelle verwendet wird.

Wenn man bei einem solchen Parsing mit einem Stack arbeitet, hat es sich in Zusammenhang mit der Erfindung als vorteilhaft erwiesen, dass der erweiterte Kontext das nicht-terminale Grammatiksymbol des obersten Stackelementes oder den Phrasenkopf des obersten Stackelementes enthält.

Das Verfahren zur Sprachanalyse kann in der Sprachverarbeitung sowohl bei der Spracherkennung als auch bei der Sprachsynthese eingesetzt werden.

Eine Anordnung, die eingerichtet ist, eines der geschilderten Verfahren auszuführen, lässt sich zum Beispiel durch entsprechendes Programmieren und Einrichten eines Computers oder einer Rechenanlage realisieren.

Ein Programmprodukt für eine Datenverarbeitungsanlage, das Softwarecodeabschnitte enthält, mit denen eines der geschilderten Verfahren auf der Datenverarbeitungsanlage ausgeführt werden kann, lässt sich durch geeignete Implementierung des Verfahrens in einer Programmiersprache und Übersetzung in von der Datenverarbeitungsanlage ausführbaren Code ausführen. Die Softwarecodeabschnitte werden dazu gespeichert. Dabei wird unter einem Programmprodukt das Programm als handelbares Produkt verstanden. Es kann in beliebiger Form vorliegen, so zum Beispiel auf Papier, einem computerlesbaren Datenträger oder über ein Netz verteilt.

Weitere wesentliche Merkmale und Vorteile der Erfindung ergeben sich aus der Beschreibung eines Ausführungsbeispiels anhand der Zeichnungen; dabei zeigt

Figur 1 eine Zuordnungstabelle für die Zuordnung von Aktionen zu Kombinationen von Zustand und Sprachkategorie,

Figur 2 eine kontextfreie Grammatik,

Figur 3 eine einer Beispieläußerung zugeordnete syntaktische Struktur,

Figur 4 eine andere, derselben Beispieläußerung zugeordnete syntaktische Struktur, und

Figur 5 eine Folge von LR-Stacks.

Bei natürlichen Sprachen treten strukturelle Mehrdeutigkeiten auf, die für eine Reihe von Anwendungen, wie z. B. maschinelle Übersetzung und Sprachsynthese, aufgelöst werden müssen. Solche Mehrdeutigkeiten und das erfindungsgemäße Verfahren sollen hier an dem deutschsprachigen Beispiel "Die Frau sah das Kind mit dem Fernglas" erläutert werden. Diese Äußerung ist insofern zweideutig, als er zum Einen bedeuten kann, dass die Frau durch das Fernglas schaut und dabei das Kind sieht.

Zum Anderen kann die Äußerung bedeuten, dass die Frau das Kind sieht, das ein Fernglas bei sich hat.

Im Verfahren zur rechnergestützten Sprachanalyse wird die Äußerung nun zunächst in Spracheinheiten unterteilt, wobei jedes Wort eine Spracheinheit bildet. Dann werden die Spracheinheiten jeweils Sprachkategorien zugeordnet: "Die" der Kategorie "Det" für "Artikel", "Frau" der Kategorie "N" für "Substantiv", "sah" der Kategorie "V" für "Verb", "das" der Kategorie "Det" für "Artikel", "Kind" der Kategorie "N" für "Substantiv", "mit" der Kategorie "Prep" für "Präposition", "dem" der Kategorie "Det" für "Artikel" und "Fernglas" der Kategorie "N" für "Substantiv".

Die weiteren Schritte werden anhand von Figur 1 erläutert, die den Spezialfall einer Parsingtabelle darstellt, an der aber auch das allgemeine Prinzip des Verfahrens gut nachvollzogen werden kann. Zunächst wird ein Zustand "0" bestimmt. Als nächstes wird der Zustand "0" mit der Sprachkategorie "Det" der ersten Spracheinheit der Äußerung kombiniert. Dann wird der Kombination von Zustand "0" und Sprachkategorie "Det" eine Aktion "s1" zugeordnet. Da die Äußerung an dieser Stelle noch eindeutig ist, erfolgt die Zuordnung mit der Wahrscheinlichkeit 1. Die Aktion ist "s1" ("shift 1"), was bedeutet, dass der Folgezustand "1" bestimmt wird.

Ausgehend von diesem Folgezustand wird nun das Verfahren erneut ab dem Kombinieren des Zustands mit der Sprachkategorie einer Spracheinheit ausgeführt. Im Beispiel wird den Spracheinheiten und damit auch ihren Kategorien die Reihenfolge der Spracheinheiten in der Äußerung zugeteilt. Deshalb wird der Folgezustand "2" mit der Sprachkategorie "N" der nächsten Spracheinheit "Frau" kombiniert. Dieser Kombination des Zustands "1" mit der Sprachkategorie "Frau" wird dann die Aktion "s3" zugeordnet und durch das Ausführen der Aktion "s3" ("shift 3") der Folgezustand "3" bestimmt.

Diese Vorgehensweise wird weiter fortgeführt, wobei neben den "shift"-Aktionen, die nur zum Bestimmen eines neuen Zustands führen, auch noch "reduce"-Aktionen auftreten. Diese "reduce"-Aktionen bewirken

zunächst das Ausführen einer Grammatikregel, wobei die Aktion "rn" die Anwendung der Strukturregel (n) bewirkt.

Ein Beispiel für eine solche Grammatik ist in Figur 2 dargestellt. Es handelt sich dabei um eine kontextfreie Grammatik mit sechs Regeln. Dabei steht das Symbol "NP" für "Nominalphrase", das Symbol "PP" für "Präpositionalphrase" und das Symbol "VP" für "Verbalphrase".

Wird zum Beispiel der Kombination von Zustand (3) und Sprachkategorie "V" die Aktion "r2" zugeordnet, so wird zunächst Regel (2) der Grammatik ausgeführt und die Sprachkategorien "Det" und "N" zu der Sprachkategorie "NP" reduziert. Dann wird unter der Spalte "NP" der Parsingtabelle nach Figur 1 der Befehl "g2" ausgeführt und am Ende des Ausführens der Aktion schließlich der Folgezustand "2" bestimmt.

Weiterhin stehen in der Parsingtabelle nach Figur 1 die Symbole "$" für "Satzende", "Utterance" für "Äußerung" und "accept" für das Ende des Verfahrens. Zum allgemeinen Zusammenhang einer Grammatik, wie derjenigen nach Figur 2, mit einer Parsingtabelle, wie der nach Figur 1, vergleiche A.V. Aho, R. Sethi und J.D. Ullman "Compilers: Principle, Techniques and Tools", Addison Wesley, Reading, 1986.

Bei den Kombinationen von Zustand "9" und Sprachkategorie "Prep" und von Zustand "10" und Sprachkategorie "$" kommt es nun aufgrund der Mehrdeutigkeit der natürlichen Sprache zu einer mehrdeutigen Zuordnung von Aktionen. Das heißt, dass einer Kombination von Zustand und Sprachkategorie mehr als eine Aktion zugeordnet wird. Eine solche Situation ist mit einem deterministischen Verfahren nicht eindeutig auflösbar. Im gegebenen stochastischen Verfahren kann man die Mehrdeutigkeit allerdings durch die Zuordnung der unterschiedlichen Aktionen zu der Kombination von Zustand und Sprachkategorie mit einer gewissen Wahrscheinlichkeit vornehmen. So hat zum Beispiel für die Kombination von Zustand "9" und Sprachkategorie "Prep" die Aktion "s5" die Wahrscheinlichkeit 0,7 und die Aktion "r6" die Wahrscheinlichkeit 0,3. In Figur 1 sind die Wahrscheinlichkeiten der einzelnen Aktionen jeweils in Klammern hinter den Aktionen angegeben. Wie diese Wahrscheinlichkeiten ermittelt werden, wird weiter unten erläutert.

Für die Beispieläußerung ergeben sich insgesamt die beiden möglichen Folgen von Aktionen "s1" → "s3" → "r2" → "s4" → "s1" → "s3" → "r2" → "s5" → "s1" → "s3" → "r2" → "r6" → "r3" → "r5" → "r1" → accept und "s1" → "s3" → "r2" → "s4" → "s1" → "s3" → "r2" → "s5" → "s1" → "s3" → "r2" → "r6" → "r4" → "r1" → accept. Dementsprechend werden der sprachlichen Äußerung die beiden in den Figuren 3 und 4 als Parserbäume dargestellten syntaktischen Strukturen zugeordnet.

Während des Verfahrens werden die Wahrscheinlichkeiten der aufeinanderfolgenden Aktionen für die jeweiligen Alternativen miteinander multipliziert, bzw. im Falle logarithmischer Wahrscheinlichkeiten addiert. Damit lässt sich den gefundenen alternativen Strukturen jeweils eine Gesamtwahrscheinlichkeit zuordnen. So kann die Auswahl einer wahrscheinlichsten Struktur erfolgen, die zum Beispiel einer maschinelle Übersetzung oder Sprachsynthese der Äußerung zugrunde gelegt werden kann.

Für eine genaue Analyse ist es nunmehr von großer Wichtigkeit, die Wahrscheinlichkeiten der Aktionen möglichst genau zu bestimmen. Nach dem Stand der Technik werden diese in Abhängigkeit folgender Größen ermittelt: Der Zustände, im Beispiel "0" bis "11", einschließlich der Folgezustände, da diese beim erneuten Ausführen des Verfahrens die Zustände bilden, der Sprachkategorien, hier "Det" bis "$" oder bis "Utterance", und der Aktionen, im Beispiel "s1" bis "s5" und "r1" bis "r6". Diese syntaktischen Größen bilden den Kontext im engeren Sinne, weil sie bei der Zuordnung der Aktionen zu den Kombinationen von Zustand und Sprachkategorie unmittelbar eingehen.

Wesentlich ist nun, dass beim erfindungsgemäßen Verfahren die Wahrscheinlichkeiten in Abhängigkeit vom erweiterten Kontextes bestimmt werden. In diesem sind syntaktische Größen enthalten, die der Kontext im engeren Sinne nicht aufweist. Darüber hinaus können die Wahrscheinlichkeiten auch weiterhin vom Kontext im engeren Sinne abhängen. Dies ist zwar nicht zwingend erforderlich, wird aber in der Regel sinnvoll sein.

So ist der Beispieläußerung der Dialogakt "Schilderung" zugeordnet. Wenn der gleichen Beispieläußerung dagegen der Dialogakt "Frage" zugeordnet wäre, so würde dies zu anderen Wahrscheinlichkeiten für die Aktionen führen, da in er natürlichen Sprache eine Frage mit anderer Wahrscheinlichkeit eine bestimmte syntaktische Struktur hat als eine "Schilderung".

Gleiches gilt für die syntaktische Größe "Spracheinheit" selbst. So könnte in der Beispieläußerung nicht nur die Sprachkategorie "Substantiv" der Spracheinheit "Frau" für die Ermittlung der Wahrscheinlichkeiten verwertet werden, sondern auch die Spracheinheit "Frau" selbst, bzw. mit dieser Spracheinheit verknüpfte Informationen, wie etwa, dass die Spracheinheit "Frau" besonders häufig vor einer Präpositionalphrase steht. Im erweiterten Kontext kann diese Information nicht nur bei der Ermittlung der Wahrscheinlichkeiten für Aktionen berücksichtigt werden, die der Kombination aus einem Zustand und der der Spracheinheit "Frau" zugeordneten Sprachkategorie zugeordnet werden. Da der erweiterte Kontext für jede Kombination von Zustand und Sprachkategorie auch weitere Spracheinheiten bzw. damit verknüpfte Informationen enthalten kann, ist es im erfindungsgemäßen Verfahren nämlich auch möglich, die mit der Spracheinheit "Frau" verknüpfte Information auch an anderen Stellen des Verfahrens einfließen zu lassen.

Weiterhin kann auch die syntaktische Größe "Sprachstil" bei der Ermittlung der Wahrscheinlichkeiten

berücksichtigt werden. Wenn zum Beispiel die Beispieläußerung im Sprachstil "Märchen" vorliegt, kann dies zu anderen Wahrscheinlichkeiten für die Aktionen führen, als wenn sie im Sprachstil "Zeitungstext" vorliegt.

Beim LR-Parsing wird in der Regel mit einem Stack gearbeitet. Ein Beispiel für eine solche Arbeitsweise ist auszugsweise in Figur 5 abgebildet, wobei für die Beispieläußerung nur die Alternative nach Figur 4 wiedergegeben ist.

Zunächst wird ein Zustand "0" bestimmt. Als nächstes wird der Zustand "0" mit der Sprachkategorie "Det" der ersten Spracheinheit der Äußerung kombiniert. Dann wird der Kombination von Zustand "0" und Sprachkategorie "Det" eine Aktion "s1" zugeordnet. Da die Äußerung an dieser Stelle noch eindeutig ist, erfolgt die Zuordnung mit der Wahrscheinlichkeit 1. Die Aktion ist "s1" ("shift 1"), was bedeutet, dass der Folgezustand "1" bestimmt wird und die Sprachkategorie der ersten Spracheinheit auf den Stack gelegt wird. Die Fortsetzung des Parsingverfahrens ergibt sich analog zu den obigen Ausführungen in der für Parsingverfahren bekannten Vorgehensweise.

Zur Bestimmung der Wahrscheinlichkeiten für die Aktionen lassen sich beim Arbeiten mit einem Stack noch weitere Größen des erweiterten Kontexts auswerten. Dies ist zum einen die extreme Sprachkategorie im Stack, das heißt, die oberste oder unterste Sprachkategorie, die im jeweiligen Schritt im Stack vorhanden ist.

Zum anderen hat sich eine Abhängigkeit von der extremen nicht-terminalen Sprachkategorie im Stack als sinnvoll erwiesen. Eine kontextfreie Grammatik besteht aus Regeln, terminalen und nicht-terminalen Sprachkategorien und einem Startsymbol. Für die kontextfreie Grammatik nach Figur 2 ist "utterance" das Startsymbol. Auf der linken Seite der Pfeile stehen die nicht-terminalen Sprachkategorien. Für diese Sprachkategorien gibt es Regeln für eine Expansion. Im Gegensatz dazu existieren für die terminalen Sprachkategorien keine Expansionsregeln.

Für die Beispieläußerung werden die Wahrscheinlichkeiten, mit denen die Aktionen den Kombinationen von Zustand und Sprachkategorie zugeordnet werden, in Abhängigkeit von Sprachkategorien, Zuständen, einschließlich Folgezuständen, Aktionen, Dialogakt, Spracheinheit, Sprachstil, extremen nicht-terminalen Sprachkategorien und extremen Sprachkategorien bestimmt. Die Wahrscheinlichkeit P(T|W) einer syntaktischen Struktur T in Abhängigkeit von der Äußerung W ergibt sich aus:

$$P(T|W) = P(T) \cdot P(W|T)$$

wobei P(T) und P(W|T) wie folgt approximiert werden:

$$P(W \mid T) \approx \prod_{w_i \in W} P(w_i \mid l_i)$$

wobei $w_i$ die i-te Spracheinheit der Äußerung W ist und $l_i$ die $w_i$ zugeordnete Sprachkategorie.

$$P(T) \approx \prod_{j=1}^{|d|} P(a_{d,j} \mid k_{d,j})$$

wobei die Struktur T durch |d| viele Aktionen $a_{d,j}$ entstanden ist, die mit dem Laufindex j (j=1 ... |d|) geordnet sind. $k_{d,j}$ sei der Kontext, in dem die Aktion $a_{d,j}$ ausgeführt wird. Die Wahrscheinlichkeiten $P(a_{d,j}|k_{d,j})$ seien dabei durch die Approximation

$$P(a \mid k) = \sum_i \alpha_i \cdot P(a \mid K_i)$$

berechnet. Mit $K_i$ seien die oben erwähnten Subkontexte bezeichnet. Die $\alpha_i$ seien geeignet gewählt, wobei die Summe über allen $\alpha_i$ 1 ergibt.

Die Wahrscheinlichkeiten werden nicht unbedingt a priori erstellt, sondern erst in der jeweiligen Zuordnungssituation. Gerade bei großen Tabellen würde eine Berechnung aller eventuell auftretenden Wahrscheinlichkeiten eine unangemessenen und zum größten Teil auch unnötigen Rechen- und Zeitaufwand bedeuten.

Das Verfahren zur rechnergestützten Sprachanalyse wird auf einer Datenverarbeitungsanlage ausgeführt.

Eine Anordnung zur rechnergestützten Sprachanalyse lässt sich in Form einer entsprechend eingerichteten Datenverarbeitungsanlage realisieren. Diese weist auf:

- Entgegennahmemittel zum Entgegennehmen der Äußerung,
- Unterteilungsmittel zum Unterteilen der Äußerung in die Spracheinheiten,
- Zuordnungsmittel zum Zuordnen der Spracheinheiten zu den Sprachkategorien,
- Bestimmungsmittel zum Bestimmen eines Zustands,
- Kombinationsmittel zum Kombinieren des Zustands mit der Sprachkategorie einer Spracheinheit,
- Zuordnungsmittel zum Zuordnen einer oder mehrerer Aktionen zur Kombination von Zustand und Sprachkategorie mit einer Wahrscheinlichkeit, die vom erweiterten Kontext abhängt und

- Bestimmungsmittel zum Bestimmen einer Anzahl von Folgezuständen durch Ausführung der Aktionen.

**Patentansprüche**

1. Verfahren zur rechnergestützten Sprachanalyse, bei dem einer sprachlichen Äußerung eine syntaktische Struktur zugeordnet wird, mit

   - einem Kontext im engeren Sinne für Kombinationen von Zuständen und Spracheinheiten, der aus Sprachkategorien, Zuständen, einschließlich Folgezuständen, und Aktionen besteht,
   - einem erweiterten Kontext für die Kombinationen von Zuständen und Spracheinheiten, der syntaktische Größen enthält, die nicht im Kontext im engeren Sinne enthalten sind, und mit folgenden Schritten
   - Unterteilen der Äußerung in die Spracheinheiten,
   - Zuordnen der Spracheinheiten zu den Sprachkategorien,
   - Bestimmen eines Zustands,
   - Kombinieren des Zustands mit der Sprachkategorie einer Spracheinheit,
   - Zuordnen einer oder mehrerer Aktionen zur Kombination von Zustand und Sprachkategorie mit einer Wahrscheinlichkeit, die vom erweiterten Kontext abhängt,
   - Bestimmen einer Anzahl von Folgezuständen durch Ausführung der Aktionen und
   - erneutes Ausführen des Verfahrens ab dem Kombinieren des Zustands mit der Sprachkategorie einer Spracheinheit für zumindest einen der Folgezustände, so dass weitere Spracheinheiten der Äußerung abgearbeitet werden.

2. Verfahren nach Anspruch 1
   **dadurch gekennzeichnet,**
   **dass** der erweiterte Kontext den Dialogakt der Äußerung enthält.

3. Verfahren nach zumindest einem der Ansprüche 1 oder 2,
   **dadurch gekennzeichnet,**
   **dass** der erweiterte Kontext die Spracheinheit selbst und/oder weitere Spracheinheiten der Äußerung enthält.

4. Verfahren nach zumindest einem der vorstehenden Ansprüche,
   **dadurch gekennzeichnet, dass** der erweiterte Kontext den Sprachstil enthält, in dem die Spracheinheit und/oder die Äußerung besprochen wurde.

5. Verfahren nach zumindest einem er vorstehenden Ansprüche,
   **dadurch gekennzeichnet,**
   **dass** den Spracheinheiten eine Reihenfolge zugeteilt wird und dass die Spracheinheiten in der Reihenfolge dieser Zuteilung abgearbeitet werden.

6. Verfahren zumindest nach Anspruch 5,
   **dadurch gekennzeichnet, dass** die zugeteilte Reihenfolge der Reihenfolge oder der umgekehrten Reihenfolge der Spracheinheiten in der Äußerung entspricht.

7. Verfahren nach zumindest einem der vorstehenden Ansprüche,
   **dadurch gekennzeichnet, dass** der erweiterte Kontext hinsichtlich der syntaktischen Größen in mehrere Subkontexte aufgeteilt ist.

8. Verfahren nach zumindest einem der vorstehenden Ansprüche,
   **dadurch gekennzeichnet, dass** das Verfahren ein stochastisches Parsing, insbesondere ein stochastisches LR-Parsing ist.

9. Verfahren zumindest nach Anspruch 8,
   **dadurch gekennzeichnet,**
   **dass** das Zuordnen einer oder mehrerer Aktionen zu einer Kombination von Zustand und Sprachkategorie über eine Parsingtabelle erfolgt.

10. Verfahren zumindest nach Anspruch 8,
    **dadurch gekennzeichnet,**
    **dass** das Verfahren einen Stack aufweist.

11. Verfahren zumindest nach Anspruch 10,
    **dadurch gekennzeichnet, dass** der erweiterte Kontext eine extreme Sprachkategorie des Stacks enthält.

12. Verfahren zumindest nach Anspruch 10,
    **dadurch gekennzeichnet,**
    **dass** der erweiterte Kontext eine extreme nicht-terminale Sprachkategorie des Stacks enthält.

13. Anordnung zur rechnergestützten Sprachanalyse,
    **dadurch gekennzeichnet, dass** sie eingerichtet ist, ein Verfahren nach zumindest einem der Ansprüche 1 bis 12 auszuführen.

14. Programmprodukt für eine Datenverarbeitungsanlage, das Softwarecodeabschnitte enthält, mit denen ein Verfahren nach zumindest einem der Ansprüche 1 bis 12 auf einer Datenverarbeitungsanlage ausgeführt werden kann.

FIG 1

| | Det | N | V | Prep | $ | NP | VP | PP | Utterance |
|---|---|---|---|---|---|---|---|---|---|
| 0 | s1 (1.0) | | | | | g2 | | | g11 |
| 1 | | s3 (1.0) | | | | | | | |
| 2 | | | s4 (1.0) | s5 (1.0) | | | g6 | g7 | |
| 3 | | | r2 (1.0) | r2 (1.0) | r2 (1.0) | | | | |
| 4 | s1 (1.0) | | | | | g8 | | | |
| 5 | s1 (1.0) | | | | | g9 | | | |
| 6 | | | | | r1 (1.0) | | | | |
| 7 | | | r3 (1.0) | r3 (1.0) | r3 (1.0) | | | | |
| 8 | | | | s5 (1.0) | r5 (1.0) | | | g10 | |
| 9 | | | r6 (1.0) | s5 (0.7)<br>r6 (0.3) | r6 (1.0) | | | g7 | |
| 10 | | | | r3 (1.0) | r3 (0.4)<br>r4 (0.6) | | | | |
| 11 | | | | | accept | | | | |

# FIG 2

(1) Utterance → NP VP
(2) NP → Det N
(3) NP → NP PP
(4) VP → V NP PP
(5) VP → V NP
(6) PP → Prep NP

# FIG 3

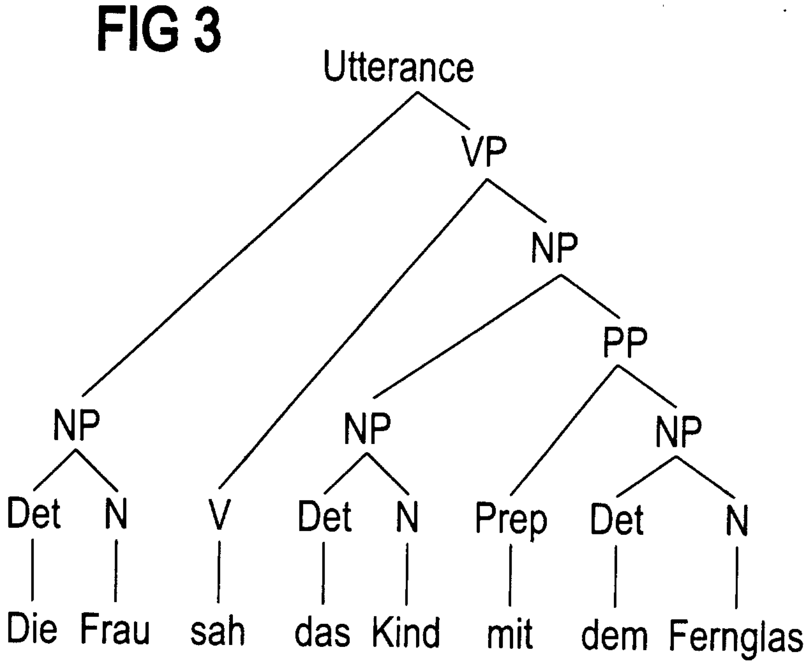

FIG 4

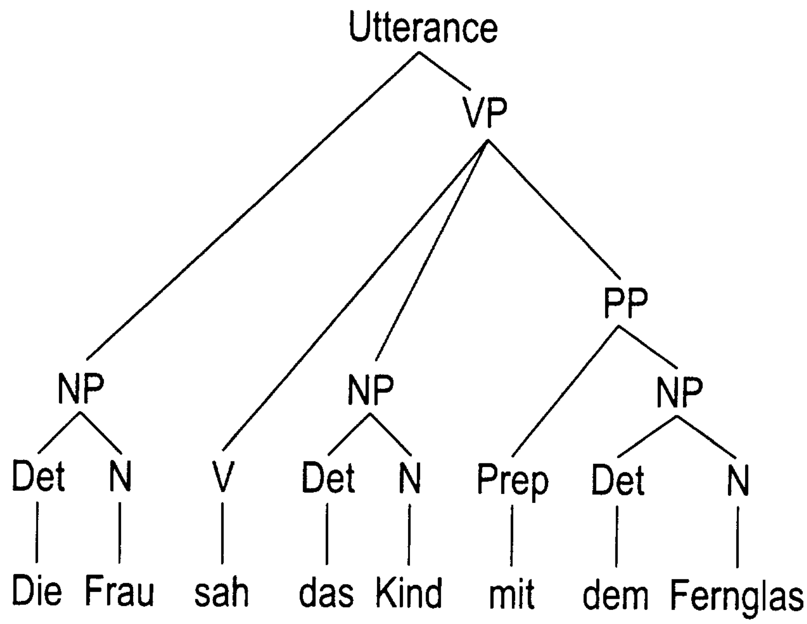
Utterance
VP
PP
NP
NP
NP
Det
N
V
Det
N
Prep
Det
N
Die
Frau
sah
das
Kind
mit
dem
Fernglas

FIG 5

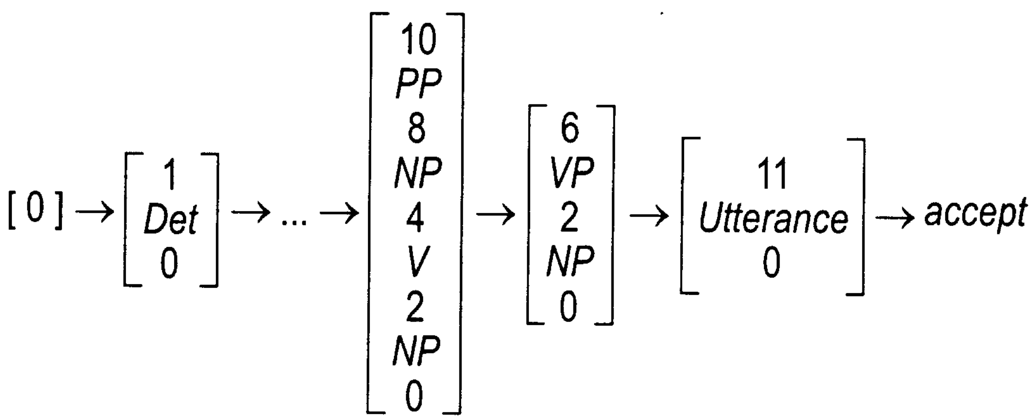
[ 0 ]
1
Det
0
...
10
PP
8
NP
4
V
2
NP
0
6
VP
2
NP
0
11
Utterance
0
accept